# EUROPÄISCHE PATENTANMELDUNG

(11) **EP 4 717 687 A1**
(43) Veröffentlichungstag der Anmeldung: **01.04.2026**
(21) Anmeldenummer: 24203726.5
(22) Anmeldetag: 30.09.2024
(51) Int. Cl.: C04B 40/00, C04B 28/02

(54) **BINDEMITTELSUSPENSION ZUR HERSTELLUNG VON BETON UND VERFAHREN ZUR HERSTELLUNG EINER BINDEMITTELSUSPENSION**

(71) Anmelder: Sonocrete GmbH, 03050 Cottbus (DE)
(72) Erfinder: REMUS, Ricardo, 03050 Cottbus (DE)
(74) Vertreter: Kleine, Hubertus

(57) **Zusammenfassung**

Eine Bindemittelsuspension (41) zur Herstellung von Beton (31, 55) umfassend ein Gemisch aus Wasser (53), Gesteinsmehl (51) und einem Zement (52), wobei die Fließfähigkeit der Bindemittelsuspension (41) gemessen als Trichterauslaufzeit nach DIN EN 445:2008-01 nach einem Lagerzeitraum von höchstens 24h mehr als 5 Sekunden und weniger als 60 Sekunden beträgt; sowie ein Verfahren zur Herstellung einer stabilisierten Bindemittelsuspension (41) und ein Verfahren zur Herstellung von Beton (33, 55).

## Beschreibung

Die vorliegende Erfindung betrifft eine Bindemittelsuspension zur Herstellung von Beton, ein Verfahren zur Herstellung einer stabilisierten Bindemittelsuspension und ein Verfahren zur Herstellung von Beton.

Mittels Vormischverfahren können Zement und Wasser zu einer Bindemittelsuspension vorgemischt werden, um Hydratphasen zu erzeugen. Dadurch kann ein Beton mit beschleunigter Festigkeitsentwicklung hergestellt werden und eine schnellere Produktion sowie die Reduktion von CO₂ Emissionen wird ermöglicht. Suspensionen aus Zement und Wasser weisen nach 1 - 2 Stunden bereits Hydratphasen auf, die zur Beschleunigung der Betondruckfestigkeitsentwicklung dienen. Durch die fortschreitende Reaktion des Zementes wachsen die Hydratphasen weiter und beginnen sich zu verzahnen. Erstes führt zu einer abnehmenden Beschleunigungswirkung und letzteres zu einer Verfestigung des Materials. Eine, über einen längeren Zeitraum stabile, Beschleunigungswirkung kann somit nur schwer erzielt werden. Zusätzlich führt die starke Neigung zur Verfestigung zu Ablagerungen und erhöhten Reinigungsaufwand.

Die Aufgabe der vorliegenden Erfindung ist es, die Nachteile des Standes der Technik zu überwinden.

Insbesondere ist es die Aufgabe der Erfindung, eine Bindemittelsuspension mit anhaltender und bevorzugt erhöhter Beschleunigung bereitzustellen.

Eine erfindungsgemäße Bindemittelsuspension zur Herstellung von Beton umfasst ein Gemisch aus Wasser, Gesteinsmehl und einem Zement, wobei die Fließfähigkeit der Bindemittelsuspension nach einem Lagerzeitraum von höchstens 24h mindestens 5 Sekunden und höchstens 60 Sekunden beträgt. Die besagte Fließfähigkeit wird gemäß der DIN EN 445:2008-01 als Trichterauslaufzeit bei Temperaturen von 25°C und Atmosphärendruck ermittelt. Als Messvorrichtung wird ein gemäß der vorgenannten DIN definierter sogenannter Marsh-Trichter mit 1 Liter Fassungsvermögen genutzt.

Die Bindemittelsuspension wird über den Lagerzeitraum, bevorzugt für 24h, bis zum Erreichen der Messungen gelagert. Die Fließfähigkeit wird nach Abschluss der Lagerzeit ermittelt.

Das Gesteinsmehl stellt eine Substratoberfläche für die Bildung der Beschleunigung des Betons notwendigen Hydratphasen bereit. Dadurch erfolgt eine homogenere Verteilung und ein gleichmäßigeres Wachstum der Hydratphasen und eine Stabilisierung der Suspension im Vergleich zu reinen Zementsuspensionen.

Die Bereitstellung einer langzeit-fließfähigen Bindemittelsuspension ermöglicht eine einfachere Transportfähigkeit und eine Weiterverarbeitung. Insgesamt wird die Herstellung von Beton besser planbar nach dem Bedarf und der Kapazität in der weiteren Verarbeitung z.B. der Verfügbarkeit von Gussformen für Betonfertigbauteile. Hierbei stellt die erfindungsgemäße Bindemittelsuspension ein Novum in der Bauindustrie dar.

Weitere vorteilhafte Ausgestaltungen der Erfindung sind Gegenstand der Unteransprüche.

Der Lagerzeitraum der Bindemittelsuspension kann höchstens 24h, bevorzugt höchstens 20h, bevorzugt höchstens 16h, bevorzugt höchstens 12h, und/oder mindestens 2h, bevorzugt mindestens 4h, bevorzugt mindestens 8h, betragen.

Weiterhin kann eine bevorzugte dynamische Viskosität der Bindemittelsuspension unter Normbedingungen (20 °C, Atmosphärendruck) und einer durchschnittlichen Scherbelastung von 1*10⁴ Pa mehr als 1,0 mPa*s oder bevorzugt mehr als 1,05 mPa*s oder bevorzugt mehr als 1,5 mPa*s oder bevorzugt mehr als 5 mPa*s und weniger als 1*10⁴ mPa*s oder bevorzugt weniger als 1*10³ mPa*s oder bevorzugt weniger als 1*10² mPa*s betragen.

Die Bindemittelsuspension kann weiter bevorzugt eine Fließfähigkeit gemessen als Trichterauslaufzeit nach DIN EN 445:2008-01 einem Lagerzeitraum von höchstens 24h mindestens 7 Sekunden und höchstens 50 Sekunden, vorzugsweise höchstens 40 Sekunden, vorzugsweise höchstens 20 Sekunden, betragen.

Für eine weiter optimierte Weiterverarbeitung ist es von Vorteil, wenn die Bindemittelsuspension nach einem Lagerzeitraum von 24h pumpfähig und/oder rührfähig ist.

Der bevorzugte Anteil an Feststoffen in der Bindemittelsuspension kann vorteilhaft mindestens 20 Gew.% oder bevorzugt mindestens 30 Gew.% oder bevorzugt mindestens 40 Gew.% und/oder höchstens 70 Gew.% oder bevorzugt höchstens 60 Gew.% betragen.

Das Gesteinsmehl bildet ein Substrat zur Ausbildung von Hydratphasen. Ein besonders guter Kompromiss zwischen einer Kristallisationskeimbildung und schneller Aushärtung bei Zugabe weiterer Komponenten wie einer Gesteinskörnung ergibt sich, wenn das Gesteinsmehl Kalksteinmehl umfasst oder besonders bevorzugt aus Kalksteinmehl besteht.

Besonders bevorzugt kann die Bindemittelsuspension ausschließlich aus Wasser, Gesteinsmehl und Zement bestehen.

Es hat sich überdies in Versuchen als besonders günstig erwiesen, wenn der Massenanteil an Gesteinsmehl mindestens 50 Gew.% oder bevorzugt mindestens 60 Gew.% oder bevorzugt mindestens 70 Gew.% und/oder höchstens 90 Gew.% oder bevorzugt höchstens 80 Gew.%, bezogen auf die Gesamtmasse aus Zement und Gesteinsmehl der Bindemittelsuspension, beträgt. Dadurch wird eine große Menge an Substratoberfläche zur Verfügung gestellt, so dass der weit überwiegende Anteil an Hydratphasen auf einem Substrat gebildet wird.

Der Massenanteil an Wasser kann bevorzugt mindestens 40 Gew.% oder bevorzugt mindestens 60 Gew.% oder bevorzugt mindestens 70 Gew.% und/oder höchstens 90 Gew.% oder bevorzugt höchstens 80 Gew.%, bezogen auf die Gesamtmasse aus Zement, Wasser und Gesteinsmehl der Bindemittelsuspension, betragen.

Weiterhin kann der Massenanteil an Zement mindestens 10 Gew.% oder bevorzugt mindestens 20 Gew.% oder bevorzugt mindestens 30 Gew.% und/oder höchstens 50 Gew.% oder bevorzugt höchstens 40 Gew.%, bezogen auf die Gesamtmasse aus Zement und Gesteinsmehl der Bindemittelsuspension, betragen. Dadurch wird ein spontanes und beschleunigtes Aushärten der Bindemittelsuspension bereits vor der Zugabe weiterer Betonbestandteile, wie beispielsweise weiterer Zement und/oder Zusatzstoffe, Zusatzmittel und Gesteinskörnung, verhindert.

Das Verhältnis aus Zement und Gesteinsmehl in der Bindemittelsuspension kann vorteilhaft mindestens 0,1 oder bevorzugt mindestens 0,2 oder bevorzugt mindestens 0,3 oder bevorzugt mindestens 0,4 und/oder höchstens 1,0 oder bevorzugt höchstens 0,9 oder bevorzugt höchstens 0,8 betragen. Idealerweise wird diese Bindemittelsuspension während ihrer Bereitstellung mit einem Energieeintrag, vorzugsweise durch Ultraschall-Behandlung, aktiviert. Die Dauer und die Intensität des Energieeintrags kann in Abhängigkeit vom vorgenannten Verhältnis aus Zement und Gesteinsmehl variieren. Ein erhöhter Anteil an Gesteinsmehl kann einen erhöhten Energieeintrags erfordern.

Es ist von Vorteil, wenn die Änderung, insbesondere der Abfall, der elektrischen Leitfähigkeit der Bindemittelsuspension bei einer Messzeit von 1h höchstens 2,0 mS/cm, vorzugsweise höchstens 1,0 mS/cm, weiter vorzugsweise höchstens 0,8 mS/cm, weiter vorzugsweise zwischen 0 und 0,7 mS/cm, weiter vorzugsweise zwischen 0,1 mS/cm bis 0,6 mS/cm, bei einer Suspensionstemperatur von 25°C und Atmosphärendruck, beträgt. Bevorzugt erfolgt die Messung der Änderung der elektrischen Leitfähigkeit nach der Aktivierung der Bindemittelsuspension.

Es wurde erkannt, dass Zunahme oder Abnahme von lonenkonzentrationen, besonders Calcium-lonenkonzentrationen, mit einer Änderung der Leitfähigkeit einhergeht. Eine besonders stabile Bindemittelsuspension wird erreicht, wenn die Änderung der Leitfähigkeit gering ist.

Ein weiterer erfindungsgemäßer unabhängiger Aspekt ist eine Bindemittelsuspension zur Herstellung von Beton umfassend ein Gemisch aus Wasser, Gesteinsmehl und einem Zement, wobei die Änderung, insbesondere der Abfall, der elektrischen Leitfähigkeit der Bindemittelsuspension bei einer Messzeit von 1h höchstens 2 mS/cm, vorzugsweise höchstens 1 mS/cm bei einer Suspensionstemperatur von 25°C und Atmosphärendruck, beträgt.

Die Änderung der elektrischen Leitfähigkeit kann weiter bevorzugt höchstens 0,8 mS/cm, vorzugsweise 0,6 mS/cm, vorzugsweise zwischen 0 und 1 mS/cm, und/oder mindestens 0,01 mS/cm, vorzugsweise mindestens 0,05 mS/cm, betragen.

Weitere vorteilhafte Ausgestaltungen des erfindungsgemäß unabhängigen Aspekts sind Gegenstand der Unteransprüche.

Weiterhin erfindungsgemäß ist ein Verfahren zur Herstellung einer stabilisierten Bindemittelsuspension, vorzugsweise einer vorbeschriebenen erfindungsgemäßen Bindemittelsuspension. Das Verfahren weist zumindest die folgenden Schritte auf:
i) ein Bereitstellen einer Bindemittelsuspension durch Mischen zumindest von Wasser, Gesteinsmehl und Zement und
ii) ein Lagern der Bindemittelsuspension über einen Lagerzeitraum von mindestens 4h und vorzugsweise höchstens 96h, vorzugsweise höchstens 48h, vorzugsweise höchstens 24h.,

Durch die Lagerung kann eine Stabilisierung der Bindemittelsuspension und damit über den weiteren Lagerzeitraum vergleichsweise gleichbleibende Materialeigenschaften erreicht werden.

Durch das Lagern wird die Verarbeitung der Bindemittelsuspension vergleichsweise unkompliziert und kann mit weniger Arbeitsaufwand eingesetzt werden. Insbesondere muss keine Dosierung der Bindemittelsuspension in Abhängigkeit vom jeweiligen Lagerzeitpunkt, an welchem bei der Betonherstellung die Zugabe der Gesteinskörnung erfolgen soll, erfolgen.

Das Bereitstellen der Bindemittelsuspension kann eine Aktivierung der Bindemittelsuspension durch einen Energieeintrag, vorzugsweise durch Ultraschallbehandlung, über einen Behandlungszeitraum umfassen. Über den Behandlungszeitraum hinaus kann ein weiterer Energieeintrag erfolgen. Beispielsweise kann zeitweise ein Energieeintrag auch während eines Rührens der stabilisierten Bindemittelsuspension während der Lagerung erfolgen.

In diesem Kontext kann das Lagern bei stillstehender Bindemittelsuspension erfolgen. Allerdings kann das Lagern vorzugsweise auch ein Rühren oder ein andersartiges Bewegen der Bindemittelsuspension umfassen.

Als physikalische Größe zur Überwachung des Umfangs des Energieeintrags kann die Leitfähigkeit genutzt werden. Es wurde erkannt, dass eine verstärkte zeitliche Ausbildung von Hydratphasen mit einer zeitlichen Änderung der Leitfähigkeit einhergeht. Eine besonders gute Qualität der Bindemittelsuspension wird erreicht, wenn ein Anstieg der Leitfähigkeit überwunden und in einem Abfall der Leitfähigkeit übergegangen ist. Somit sollte der Energieeintrag vorteilhafterweise erst enden, wenn der besagte Anstieg überschritten ist und ein Vorzeichenwechsel von einem positiven Anstieg in einen negativen Anstieg, gleichbedeutend mit einem Abfall, für den zeitlichen Verlauf der Leitfähigkeit übergegangen ist. Dies bedeutet nicht, dass der Energieeintrag an diesem Punkt zwingend beendet sein muss, vielmehr kann ein Energieeintrag über diesen Zeitpunkt hinaus erfolgen.

Allerdings kann eine Überwachung des Energieeintrags durch Messung der Leitfähigkeit dahingehend erfolgen wann der besagte Vorzeichenwechsel erfolgt ist. Danach kann beispielsweise über ein vordefiniertes Sicherheitszeitintervall, z.B. 30 min, weiterhin ein Energieeintrag erfolgen und danach die eigentliche Lagerzeit beginnen.

Der Energieeintrag kann dabei kontinuierlich oder intermittierend, vorzugsweise mit einem gleichbleibenden Wiederholungsintervall, erfolgen.

Weiterhin erfindungsgemäß ist ein Verfahren zur Herstellung von Beton, umfassend folgende Schritte:
i) ein Bereitstellen einer erfindungsgemäßen oder erfindungsgemäßhergestellten Bindemittelsuspension,
ii) ein Mischen der Bindemittelsuspension und weiteren Bestandteilen des Betons, vorzugsweise weiterer Zement, ein oder mehrerer weiterer Zusatzstoffe, Zusatzmittel und/oder Gesteinskörnung.

In Kombination mit den weiteren Bestandteilen des Betons (z.B. weiterer Zement, weitere Zusatzstoffe, Zusatzmittel und/oder Gesteinskörnung) erfolgt ein Aushärten des Betons mit hohen Frühdruckfestigkeiten im Vergleich zu einem üblicherweise hergestellten Beton und zu Beton mit einer vorabgemischten Zementsuspension ohne vorherige Aktivierung.

Dabei kann der Beton eine Frühdruckfestigkeit aufweisen, die um den Faktor 2 - 4 erhöht ist, gegenüber einem konventionell hergestellten Beton gleicher Zusammensetzung.

Eine besondere Erkenntnis der vorliegenden Erfindung ist es, dass die Bindemittelsuspension nach ihrer Aktivierung, vorzugsweise durch Ultraschall, im fließfähigen Zustand verbleibt und trotzdem eine weitere Verarbeitung zu einem Beton ermöglicht. Dies macht insgesamt einen deutlich flexibleren Einsatz der Bindemittelsuspension im Prozess der Betonherstellung möglich, als dies bei anderen Bindemitteln, wie z.B. Zement, bislang üblich ist.

Nachfolgend wird die Erfindung anhand mehrerer Ausführungsvarianten und unter Zuhilfenahme der nachfolgenden Figuren näher erläutert. Es zeigen:
- Fig. 1: eine schematische Darstellung einer Anlage zur Bereitstellung einer erfindungsgemäßen Bindemittelsuspension und einer Betoncharge;
- Fig. 2: ein Prozessschema zu mehreren Verfahrensvarianten zur Bereitstellung einer Betoncharge;
- Fig. 3: Diagramm zur Messung der Fließfähigkeit einer erfindungsgemäßen Bindemittelsuspension und zweier Vergleichssuspensionen;
- Fig. 4: Diagramm zur Druckfestigkeit mehrerer Betone mit Vergleichsbetone und Betone unter Verwendung der erfindungsgemäßen Bindemittelsuspension;
- Fig. 5: Leitfähigkeitsmessung einer Bindemittelsuspension aus Kalksteinmehl, Zement und Wasser während ihrer Aktivierung und im Anschluss daran; und
- Fig. 6: Temperaturverlauf der Bindemittelsuspension während der Leitfähigkeitsmessung der Fig. 5.

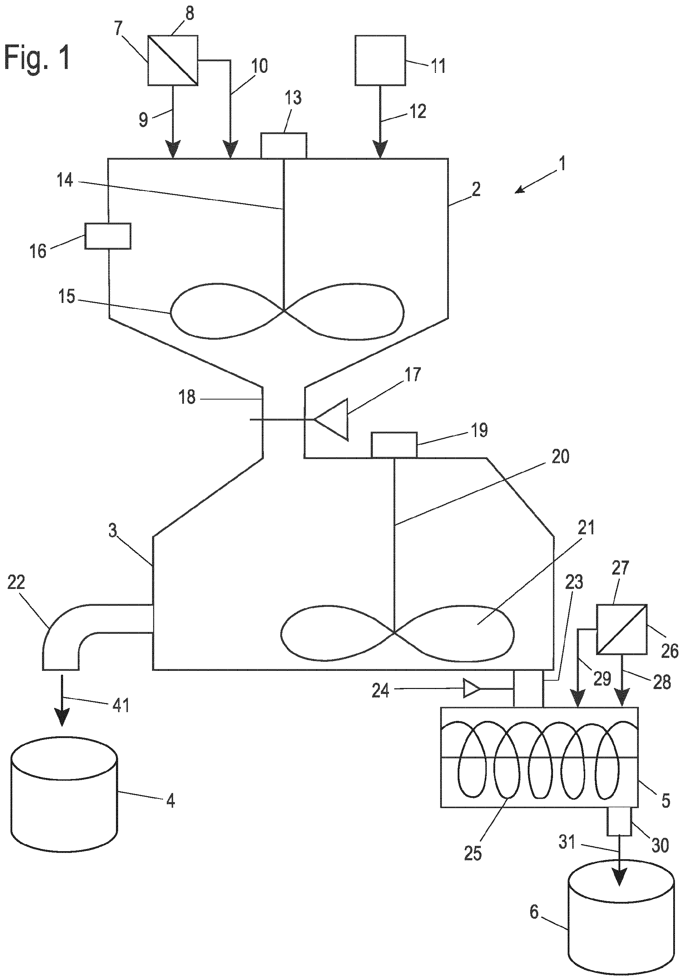

Fig. 1 zeigt beispielhaft eine Anlage 1 zur Herstellung einer erfindungsgemäßen Bindemittelsuspension 41 und zur Herstellung eines daraus hergestellten Betons 31. Die Anlage umfasst ein Behandlungsbehälter 2, in welchem ein Energieeintrag in Form von Ultraschall in die Bindemittelsuspension erfolgt. Dieser Energieeintrag ermöglicht eine Aktivierung einer im Behandlungsbehälter 2 bereitgestellten Bindemittelsuspension. Hierfür weist der Behandlungsbehälter 2 ein Gerät 16 zur Erzeugung und den Eintrag von Ultraschall in die Bindemittelsuspension auf.

Weiterhin weist die Anlage 1 einen Kristallisations- und/oder Lagerbehälter 3 auf. Dieser ist über eine Überführungsleitung 18 mit dem Behandlungsbehälter 2 verbunden. Ein in der Überführungsleitung 18 angeordnetes Regelorgan 17, z.B. eine Drosselklappe oder ein Ventil, kann zur Überleitung nach einer vorbestimmten Aktvierungszeit genutzt werden.

Lediglich optional weist die Anlage 1 einen Betonmischer 5 auf. Der Betonmischer 5 weist eine Mischvorrichtung, z.B. eine Rührwelle 25 und/oder eine Förderschnecke auf. Dieser ist über eine Überführungsleitung 23 mit dem Kristallisations- und/oder Lagerbehälter 3 verbunden. Ein in der Überführungsleitung 23 angeordnetes Regelorgan 24, beispielsweise in Form einer Drosselklappe oder eines Ventils, kann zur Überleitung nach einer vorbestimmten Lagerzeit betätigt werden.

Sowohl der Behandlungsbehälter 2 als auch der Kristallisations- und/oder Lagerbehälter 3 weisen ein Rührwerk 13 und 19 umfassend einen Antriebsmotor, eine Rührwelle 14 und 20 und ein Rührorgan 15, 21, z.B. Rührflügel, Rühranker, Rührwendel und dergleichen, aufweisen.

Der Behandlungsbehälter 2 weist eine erste Zulaufleitung 9 für Zement und eine zweite Zulaufleitung 10 für ein Gesteinsmehl auf.

Über die Zulaufleitungen 9 und 10 kann eine dosierte Zuleitung von Zement und von Gesteinsmehl aus einem entsprechenden Lagerbehälter 7 und 8 in den Behandlungsbehälter 2 erfolgen.

Weiterhin kann über eine gesonderte Zuleitung 12 eine Zuleitung von Wasser aus einem Lagerbehälter 11 in den Behandlungsbehälter 2 erfolgen. Insgesamt weist der Behandlungsbehälter mehrere Zuleitungen 9, 10 und 12 auf.

Der Kristallisations- und/oder Lagerbehälter 3 weist einen Auslass 22 zum Ableiten einer erfindungsgemäßen Bindemittelsuspension aus dem Kristallisations- und/oder Lagerbehälter in ein Transportbehältnis 4, z.B. einen Kanister oder eine Tonne, oder ein Transportfahrzeug auf.

Der Betonmischer 5 weist einen Ablauf 30 für Beton, sowie eine Zulaufleitung für Gesteinskörnung und Wasser 28 und 29 aus einem jeweiligen Vorratstank 26 und 27 auf. Durch den Ablauf 30 wird Beton 31 in ein Transportbehältnis 6, eine Form zur Aushärtung zu einem Betonfertigbauteil oder ein Transportfahrzeug zum Transport zu einer Baustelle geleitet.

Die in Fig. 1 dargestellte Anlage ist nur eine von einer Vielzahl von Möglichkeiten einer Anlage zur Bereitstellung einer erfindungsgemäßen Bindemittelsuspension. Es gibt allerdings eine Vielzahl anderer Ausführungsvarianten, um eine entsprechende Bereitstellung herbeizuführen.

Die Besonderheit der Anlage 1 ist die Möglichkeit des Ausleitens einer aktivierten Bindemittelsuspension aus Gesteinsmehl, Wasser und Zement aus der Anlage, welche über eine vergleichsweise lange Zeit fließfähig und damit über einen längeren Zeitraum verarbeitbar ist im Vergleich zu herkömmlichen Zementsuspensionen.

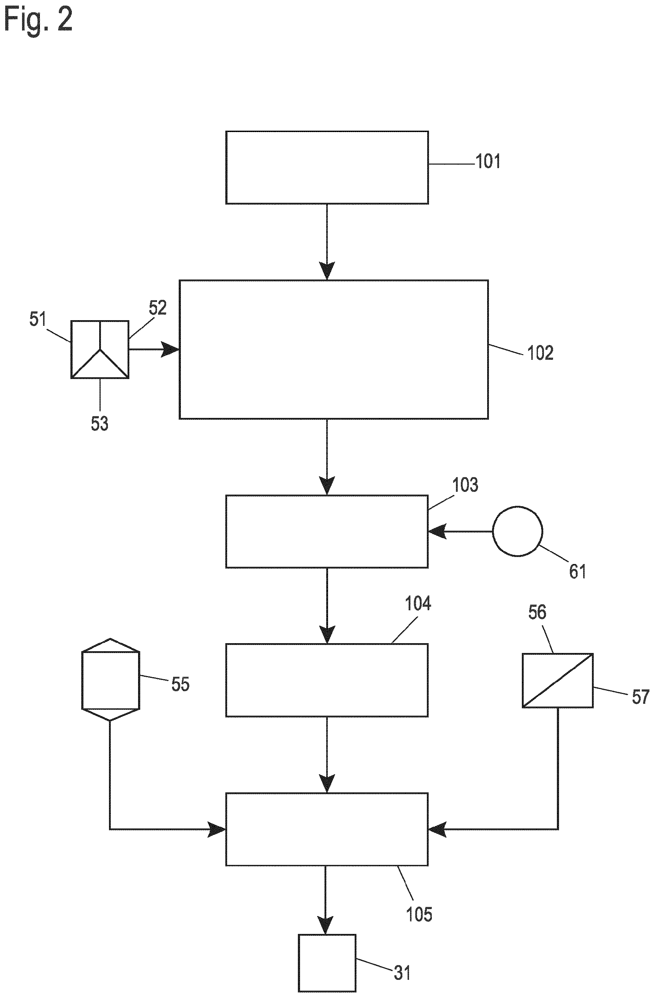

Die Bindemittelsuspension 41 kann gemäß einem Verfahren nach Fig. 2 bereitgestellt und in mehreren Verfahrensvarianten weiterverarbeitet werden. In einem ersten Schritt erfolgt das Bereitstellen 101 einer Anlage zur Bereitstellung einer aktivierten Bindemittelsuspension.

In einem zweiten Schritt erfolgt das Zuführen 102 von Gesteinsmehl 51, Zement 52 und Wasser 53 in den Behandlungsbehälter 2 unter Bereitstellen einer Bindemittelsuspension.

Sodann erfolgt in einem Schritt das Aktivieren 103 der Bindemittelsuspension durch einen Eintrag von Energie 61, insbesondere von Ultraschall.

Der Ultraschall-Eintrag in die Suspension kann durch eine Ultraschall-Sonotrode, als Teil des Geräts 16 zur Erzeugung und den Eintrag von Ultraschall ausgebildet sein und arbeitet bevorzugt in folgendem Bereich (Werte beziehen sich auf T=25°C und Normaldruck):
- Intensität des emittierten Ultraschalls: 25-250 W/cm2

Wenn Ultraschall in ein Medium eingebracht wird, werden die Partikel und das Medium in Schwingung versetzt. Diese Schwingung überträgt kinetische Energie der Ultraschallwelle. Die Intensität (I) entspricht dabei der Leistung z.B. Watt die pro Fläche transportiert wird. Die Einheit ist Leistung pro Fläche (z.B. W/cm2).
- Amplitude des emittierten Ultraschalls: 15-500 pm.

Die Amplitude (u) beschreibt die Auslenkung der Ultraschallwelle (z.B. in pm) Bei gleichbleibender Frequenz führen höhere Amplituden zu einer Erhöhung der Intensität. Je größer die Amplitude ist, desto größer sind die Druckunterschiede während Hochdruck- und Niederdruckzyklen.
- Frequenz des ausgesandten Ultraschalls: bevorzugt 10-30 kHz

Die Frequenz (f) beschreibt die Rate der Schwingungen an der Spitze der Ultraschallsonde. Da die Bildung, das Wachstum und die Implosion von Dampfblasen ein zeitabhängiger Prozess ist, führen höhere Frequenzen zu kleineren Kavitationsblasen.
- Spezifischer Energieeintrag (ins Medium - Wasser): bevorzugt 25-250 Ws/ml

Eine Ermittlung der vorgenannten Werte kann beispielsweise in Wasser elektroakustisch mittels eines Hydrophons erfolgen.

Durch das Aktivieren wird die erfindungsgemäße Bindemittelsuspension bereitgestellt. Anders als bisher weist die bereitgestellte Bindemittelsuspension, im Vergleich zu bisherigen Zementsuspensionen, eine langanhaltende Fließfähigkeit auf und zugleich höhere Frühdruckfestigkeiten bei Weiterverarbeitung zum Beton als bei nichtaktivierten Zementsuspensionen. Somit kann das erfindungsgemäße Verfahren an dieser Stelle bereits beendet sein. Ebenfalls erfindungsgemäß kann allerdings auch eine Weiterverarbeitung zu einem Beton 54 erfolgen.

Zur Lagerhaltung und/oder zur Eigenschaftsoptimierung kann ein Lagern 104 der aktivierten Bindemittelsuspension 41 von zumindest 4h erfolgen. Die Weiterverarbeitung zu Beton kann durch Mischung der aktivierten Bindemittelsuspension mit weiteren Bestandteilen des Betons 55 (z.B. weiterer Zement, weitere Zusatzstoffe, Zusatzmittel und/oder Gesteinskörnung) erfolgen. Weitere optionale Bestandteile zur Einstellung der Materialeigenschaften des Betons sind Wasser 56 und Zement 57.

Das Verfahren ermöglicht u.a. die Bereitstellung einer aktivierten Bindemittelsuspension, welche sowohl nicht-aushärtende Eigenschaften aufweist und nach Zugabe der weiteren Betonbestandteile (z.B. weiterer Zement, weitere Zusatzstoffe, Zusatzmittel und/oder Gesteinskörnung) gegenüber einer herkömmlichen Zementsuspension eine erhöhte Frühfestigkeit des daraus hergestellten Betons. Dadurch werden zwei eigentlich gegenläufige Eigenschaften im Rahmen des Verfahrens vorteilhaft vereint.

Wie Untersuchungen gezeigt haben, werden Hydratphasen gezielt auf dem Gesteinsmehl gezüchtet. Während Zement in Folge der Bildung von Hydratphasen schnell aushärtet, erfolgt ist die Aushärtung der Bindemittelsuspension durch die Verwendung des Gesteinsmehl als Substrat für die Hydratphasen bis zur Zugabe von Gesteinskörnung gehemmt bzw. verlangsamt.

Das Gesteinsmehl stabilisiert die Hydratphasen über mehrere Stunden bis zu 96 Stunden, so dass die Bindemittelsuspension über diesen Zeitraum flüssig, lagerfähig und pumpfähig und somit auch transportfähig bleibt.

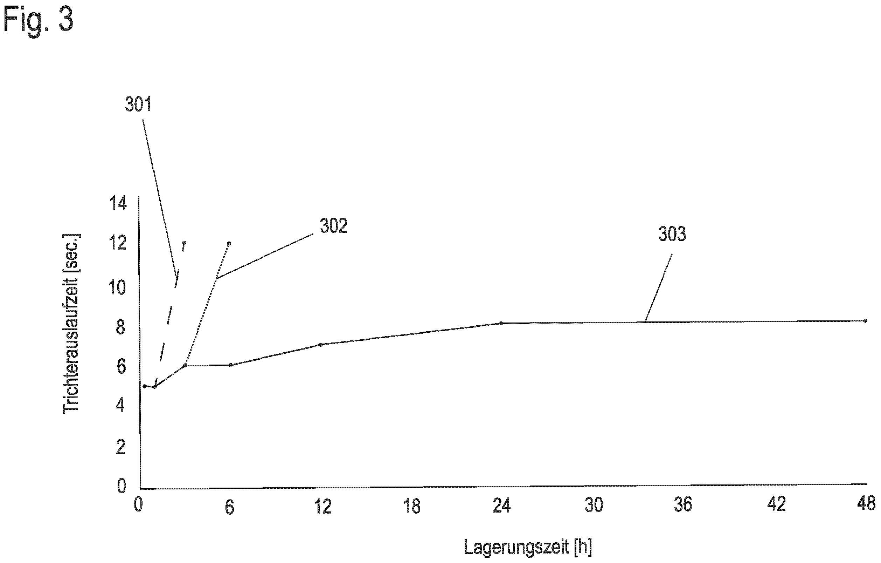

Die Fließfähigkeit der erfindungsgemäßen Bindemittelsuspension wird anhand von Fig. 3 im Vergleich zu herkömmlichen Zementsuspensionen verdeutlicht.

Die Fließfähigkeit von Suspensionen oder auch Betonen wird im Baustoffbereich über die Messung der Trichterauslaufzeit ermittelt (Vgl.: DIN EN 12350-9) in einem sogenannten Marsh-Trichter als genormtes Messinstrument mit einem Volumen von 1 Liter. Um die Pumpbarkeit und Weiterverarbeitungsfähigkeit von Suspensionen sicherzustellen ist eine gewisse Viskosität (Fließfähigkeit) sicherzustellen. Die Messung erfolgte bei 25°C und unter Normaldruck bzw. Atmosphärendruck.

Aufgrund der fortschreitenden Reaktion zwischen Zement und Wasser und der damit verbundenen Verfestigung von Zementsuspensionen steigt die Fließfähigkeit je nach Zementart in der Regel zügig an.

In Fig. 3 sind die Trichterauslaufzeiten gemäß der DIN EN 12350-9 von drei verschiedenen Suspensionen mit gleichen Feststoffkonzentrationen dargestellt:
Die Messkurve 301 beschreibt eine hoch-reaktive Zementsuspension mit schneller Reaktionsgeschwindigkeit;

Die Messkurve 302 zeigt eine Zementsuspension mit geringer Reaktionsgeschwindigkeit.

Die Messkurve 303 zeigt eine Suspension eines Zement- und Gesteinsmehlgemisches ohne nennenswerte Verfestigung.

Wie in der Fig. 3 dargestellt, steigt die Trichterauslaufzeit der beiden ZementSuspensionen rasch an, was auf eine zügige Verfestigung hinweist. Eine Weiterverarbeitung und/oder Förderung der Suspension wird damit zunehmend erschwert.

Die erfindungsgemäße Bindemittelsuspension bleibt demgegenüber über den betrachteten Zeitraum fließfähig und kann ohne Einschränkung gefördert und gepumpt werden.

Weiterhin vorteilhaft für die Weiterverarbeitung der Bindemittelsuspension sind die erhöhten Frühfestigkeiten, welche bei dem aus der Bindemittelsuspension hergestellten Beton erreichbar sind.

Weiterhin vorteilhaft bei einer Zementsuspension ist die Konstanz der Eigenschaften die am Beton ermittelt werden. Durch das schnelle Erstarren bei einer herkömmlichen Zement-Suspension sind die Eigenschaften der Suspension nur über einen kurzen Zeitraum "stabil".

Eine Zement-Gesteinsmehl-Suspension kann demgegenüber durch die gezielte Zusammensetzung, also durch das Verhältnis von Zement zu Gesteinsmehl über einen langen Zeitraum stabilisiert werden.

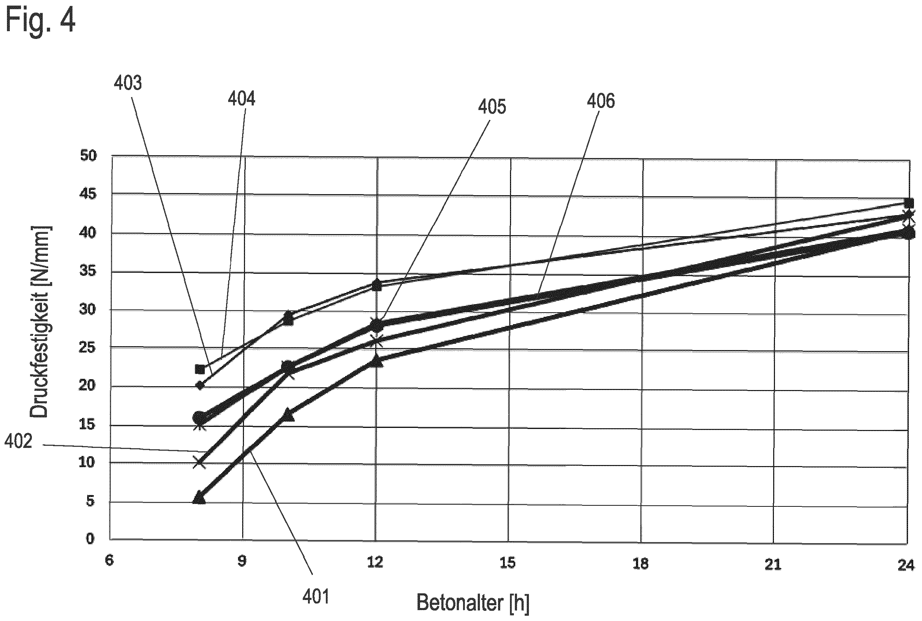

In Fig. 4 ist die Frühdruckfestigkeitsentwicklung bis zum Betonalter von 24 Stunden dargestellt. Hierbei zeigt sich besonders im Zeitraum von 8 - 12 Stunden eine signifikante Steigerung der Frühdruckfestigkeiten. In der Abbildung dargestellt ist der Verlauf der Druckfestigkeitsentwicklung für
- 401: Referenzbeton = Beton ohne jede Vorbehandlung,
- 402: für eine Zementsuspension nach 2 Stunden = Beton mit aktivierter Zementsuspension nach 2 Stunden Ultraschallaktivierung;
- 403: Zement-Gesteinsmehl-Suspension nach 3 Stunden Ultraschallaktivierung;
- 404: Zement-Gesteinsmehl-Suspension der Messkurve 403 nach 6 Stunden Lagerdauer;
- 405: Zement-Gesteinsmehl-Suspension der Messkurve 403 nach 12 Stunden Lagerdauer;
- 406: Zement-Gesteinsmehl-Suspension der Messkurve 403 nach 24 Stunden Lagerdauer.

Man erkennt aus Fig. 4 eine Steigerung der Frühdruckfestigkeiten durch die Zugabe von aktivierter Zementsuspension und Zement-Gesteinsmehl-Suspension.

Besonders für die Zement-Gesteinsmehl-Suspension zeigt sich eine deutliche Steigerung der Frühdruckfestigkeiten und eine gute Konstanz der Ergebnisse über einen Lagerzeitraum bis 24 Stunden.

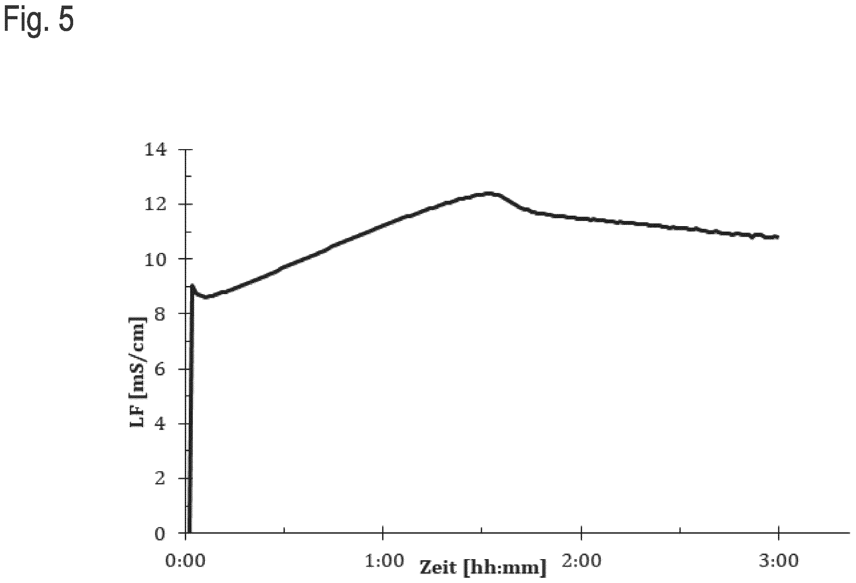

Fig. 5 zeigt eine mit KSM bezeichnete Messkurve für eine Leitfähigkeitsmessung für eine Kalksteinmehl-Zement-Suspension. Charakteristisch bei dieser Messung ist der Anstieg der Leitfähigkeit bis zu einem Maximum bei etwa 1,5h.

Während der Zeit bis zum Erreichen des Maximums und darüber hinaus wurde die Suspension mit Ultraschall behandelt.

Ab 1,5h wurde ein Abfall der Leitfähigkeit beobachtet, welcher sich auch nach Beendigung der Ultraschallbehandlung fortsetzte. Vor dem Überschreiten des Maximums erfolgt ein gezieltes und verstärktes Bilden von Hydratphasen, welches nach dem Überschreiten des Maximums der Leitfähigkeit allmählich abklingt. Es bildet sich in Folge eine mit Hydratphasen im Wesentlichen gesättigte und folglich stabilisierte Suspension aus. Diese bleibt allerdings fließfähig und pumpfähig.

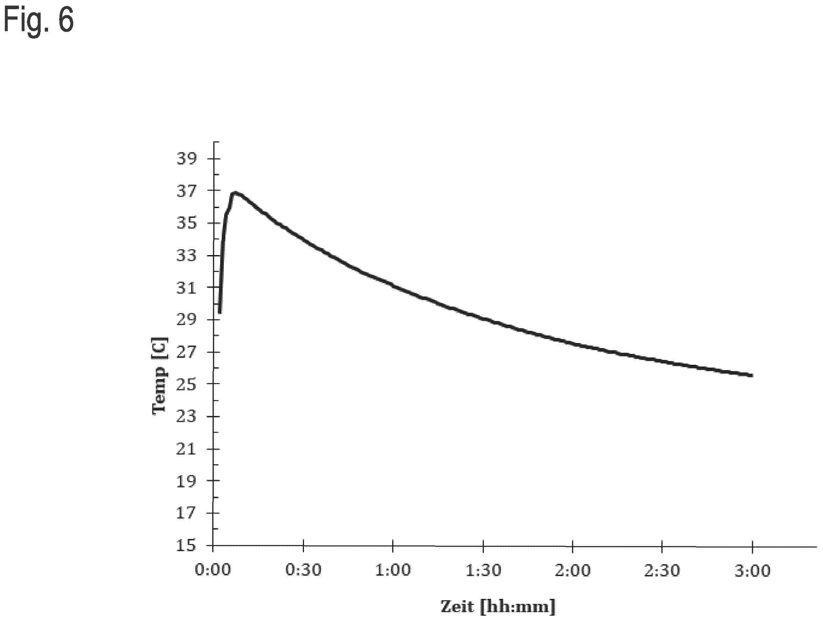

Während der Messungen der Fig. 5 wurde eine Messung der Temperatur der Bindemittelsuspension durchgeführt. Man erkennt, dass die Temperatur zunächst innerhalb der ersten 5 Minuten der Messung auf ca, 35-37°C ansteigt und dann 25°C abfällt. Die Erwärmung ist u.a. durch die Hydratbildung und durch Enthalpieeffekte begründet. Der Abfall ausgehend von Temperaturmaximum weist die Form einer exponentiell abfallenden Kurve auf. Wie anhand von Fig. 6 erkennbar ist, kann das Maximum der Leitfähigkeit nicht bei etwa 1,5h nicht auf Temperatureffekte zurückgeführt werden, sondern auf der Entwicklung der Hydratphasen innerhalb der Bindemittelsuspension.

### Bezugszeichen

- 1: Anlage
- 2: Behandlungsbehälter
- 3: Kristallisations- und/oder Lagerbehälter
- 4: Transportbehältnis
- 5: Betonmischer
- 6: Lagerbehälter
- 7: Lagerbehälter
- 8: Lagerbehälter
- 9: Zulaufleitung
- 10: Zulaufleitung
- 11: Lagerbehälter
- 12: Zuleitung
- 13: Rührwerk
- 14: Rührwelle
- 15: Rührorgan
- 16: Gerät zur Erzeugung und den Eintrag von Ultraschall
- 17: Regelorgan
- 18: Überführungsleitung
- 19: Rührwerk
- 20: Rührwelle
- 21: Rührorgan
- 22: Auslass
- 23: Überführungsleitung
- 24: Regelorgan
- 25: Rührwelle
- 26: Vorratstank
- 27: Vorratstank
- 28: Gesteinskörnung
- 29: Wasser
- 30: Ablauf für Beton
- 31: Betons
- 41: Bindemittelsuspension
- 51: Gesteinsmehl
- 52: Zement
- 53: Wasser
- 55: Beton
- 56: Wasser
- 57: Zement

- 61: Energieeintrag

- 101: Bereitstellen einer Anlage zur Bereitstellung einer aktivierten Bindemittelsuspension
- 102: Zuführen
- 103: Aktivieren
- 104: Lagern

- 301: Messkurve (Zementsuspension - hochreaktiv)
- 302: Messkurve (Zementsuspension - gering reaktiv)
- 303: Messkurve (Zement + Gesteinsmehl)
- 401: Messkurve - Referenzbeton
- 402: Messkurve Beton mit aktivierter Zementsuspension nach 2 Stunden Ultraschallaktivierung
- 403: Zement-Gesteinsmehl-Suspension nach 3 Stunden Ultraschallaktivierung;
- 404: Zement-Gesteinsmehl-Suspension nach 6 Stunden Lagerdauer;
- 405: Zement-Gesteinsmehl-Suspension nach 12 Stunden Lagerdauer;
- 406: Zement-Gesteinsmehl-Suspension nach 24 Stunden Lagerdauer.

## Patentansprüche

1. Bindemittelsuspension (41) zur Herstellung von Beton (31, 55) umfassend ein Gemisch aus Wasser (53), Gesteinsmehl (51) und einem Zement (52), wobei die Fließfähigkeit der Bindemittelsuspension (41) gemessen als Trichterauslaufzeit nach DIN EN 445:2008-01 nach einem Lagerzeitraum von höchstens 24h mindestens 5 Sekunden und höchstens 60 Sekunden beträgt.

2. Bindemittelsuspension nach Anspruch 1, **dadurch gekennzeichnet, dass** die Bindemittelsuspension (41) die Fließfähigkeit der Bindemittelsuspension (41) gemessen als Trichterauslaufzeit nach DIN EN 445:2008-01 nach einem Lagerzeitraum von höchstens 24h mindestens 7 Sekunden und höchstens 50 Sekunden beträgt.

3. Bindemittelsuspension nach Anspruch 1, **dadurch gekennzeichnet, dass** die Bindemittelsuspension (41) nach einem Lagerzeitraum von 24h pumpfähig und/oder rührfähig ist.

4. Bindemittelsuspension nach einem der vorhergehenden Ansprüche, **dadurch gekennzeichnet, dass** der Feststoffanteil der Bindemittelsuspension (41) mindestens 20 Gew.% und/oder höchstens 70 Gew.% beträgt.

5. Bindemittelsuspension nach einem der vorhergehenden Ansprüche, **dadurch gekennzeichnet, dass** der Massenanteil an Gesteinsmehl (51) mindestens 50 Gew.% und/oder höchstens 90 Gew.%, bezogen auf die Gesamtmasse aus Zement (52) und Gesteinsmehl (51) der Bindemittelsuspension (41), beträgt.

6. Bindemittelsuspension nach einem der vorhergehenden Ansprüche, **dadurch gekennzeichnet, dass** der Massenanteil an Wasser (56) mindestens 40 Gew.% und/oder höchstens 80 Gew.%, bezogen auf die Gesamtmasse aus Zement (57), Wasser (56) und Gesteinsmehl (51) der Bindemittelsuspension (41), beträgt.

7. Bindemittelsuspension nach einem der vorhergehenden Ansprüche, **dadurch gekennzeichnet, dass** der Massenanteil an Zement (52) mindestens 10 Gew.% und/oder höchstens 50 Gew.%, bezogen auf die Gesamtmasse aus Zement (52) und Gesteinsmehl (51) der Bindemittelsuspension (41), beträgt.

8. Bindemittelsuspension nach einem der vorhergehenden Ansprüche, **dadurch gekennzeichnet, dass** das Verhältnis aus Zement (52) und Gesteinsmehl (51) in der Bindemittelsuspension (41) mindestens 0,1 und/oder höchstens 1,0 beträgt.

9. Bindemittelsuspension nach einem der vorhergehenden Ansprüche, **dadurch gekennzeichnet, dass** eine Änderung, insbesondere ein Abfall, der elektrischen Leitfähigkeit der Bindemittelsuspension (41) bei einer Messzeit von 1h höchstens 2 mS/cm, vorzugsweise höchstens 1 mS/cm, bei einer Suspensionstemperatur von 25°C und Atmosphärendruck, beträgt.

10. Bindemittelsuspension nach einem der vorhergehenden Ansprüche, **dadurch gekennzeichnet, dass** der Lagerzeitraum der Bindemittelsuspension (41) nach deren Bereitstellung, vorzugsweise nach einer Aktivierung durch einen Energieeintrag, mindestens 4h oder bevorzugt 24h beträgt.

11. Verfahren zur Herstellung einer stabilisierten Bindemittelsuspension, vorzugsweise nach einem der vorhergehenden Ansprüche, **gekennzeichnet durch die folgenden Schritte:**
i) Bereitstellen einer Bindemittelsuspension (41) durch Mischen von Wasser (56), Gesteinsmehl (51) und Zement (52); und
ii) Lagern der Bindemittelsuspension (41) über einen Lagerzeitraum von mindestens 4h und vorzugsweise höchstens 96h.

12. Verfahren nach Anspruch 11, **dadurch gekennzeichnet, dass** das Bereitstellen der Bindemittelsuspension (41) eine Aktivierung (103) der Bindemittelsuspension (41) durch einen Energieeintrag (61), vorzugsweise durch Ultraschallbehandlung, über einen Behandlungszeitraum umfasst.

13. Verfahren nach Anspruch 11 oder 12, **dadurch gekennzeichnet, dass** eine Überwachung des Umfangs des Energieeintrags (61) durch eine Ermittlung der Leitfähigkeit erfolgt.

14. Verfahren nach einem der vorhergehenden Ansprüche, **dadurch gekennzeichnet, dass** die Aktivierung durch einen intermittierenden oder kontinuierlichen Energieeintrag (61) über den Behandlungszeitraum zumindest bis zu einem Vorzeichenwechsel des Anstiegs der Leitfähigkeit erfolgt.

15. Verfahren zur Herstellung von Beton (33, 55), umfassend folgende Schritte:
i) Bereitstellen einer Bindemittelsuspension (41) nach einem der Ansprüche 1 bis 10 oder gemäß den Schritten nach einem der Ansprüche 11 bis 14,
ii) Mischen der Bindemittelsuspension mit weiteren Bestandteilen des Betons (33, 55), vorzugsweise weiterer Zement, ein oder mehrerer weiterer Zusatzstoffe, Zusatzmittel und/oder Gesteinskörnung.
